# EUROPEAN PATENT SPECIFICATION

(11) **EP 1 413 483 B1**
(45) Date of publication and mention of the grant of the patent: **30.06.2010**
(21) Application number: 03256544.2
(22) Date of filing: 17.10.2003
(51) Int. Cl.: B60R 1/06

(54) **Door mirror assembly for a vehicle**
Türspiegelaufbau für ein Kraftfahrzeug
Ensemble de rétroviseur de porte pour un véhicule

(30) Priority: 25.10.2002 JP 2002310622
(43) Date of publication of application: 28.04.2004
(73) Proprietor: Murakami Corporation, Shizuoka-shi, Shizuoka (JP)
(72) Inventor: Sugiyama, Kazuhiro, Fujieda-shi Shizuoka (JP)
(74) Representative: Sutcliffe, Nicholas Robert

(56) References cited:
- EP-A- 0 276 677
- EP-A- 0 433 584
- EP-A- 1 116 628

## Description

The present invention relates to a door mirror assembly for a vehicle characterized by the structure of the attachment between a door mirror housing and a frame.

A door mirror assembly for a vehicle has conventionally been constructed of various elements and sub-assemblies, including a mirror, a control sub-assembly for controlling the angle of the mirror and a drive sub-assembly for positioning the door mirror assembly in a retracted or an operative position, all of which are installed in a shell called a door mirror housing. Since the door mirror housing, which is made of a synthetic resin, is susceptible to mechanical deformation such as torsion, it has been common to incorporate an element such as a frame into the door mirror housing. In this case, the door mirror housing and frame are commonly fixed with fasteners such as screws at three or more locations. Japanese Patent No. 3301571 (Japanese Published Patent application 07-223489) and Japanese Published Patent Application 10-100794 disclose such techniques.

In this connection, other two documents report techniques, which do not employ screws, for fixing a door mirror housing and a frame. Japanese Published Patent Application 2001-294087 discloses clips made of a synthetic resin and Japanese Published Patent Application 08-244532 discloses the application of ultrasonic welding.

It is understood that a reduction in the number of parts and man-hour expenditure will contribute to a reduction in the production cost of a door mirror assembly for a vehicle. It is therefore important to improve working efficiency as a result of a reduction in the number of fasteners such as screws in fixing a door mirror housing and a frame. However, if the number of fasteners such as screws and clips is simply decreased without further consideration for a conventional door mirror assembly, the resultant attachment strength will be inadequate. This may lead to problems in that vibration or "chattering" of a mirror during vehicular travel adversely affects the visibility of a driver or that resultant noise spoils the comfortableness in the vehicle cabin.

EP-A-0 433 584 discloses an article rearview mirror according to the preamble of claim 1 which has a mirror housing mounted to a support plate.

An object of the present invention is to provide a door mirror assembly for a vehicle, which preferably not only achieves a reduction in the number of parts for fixing a door mirror housing and a frame but also ensures adequate attachment strength there between as well as providing easy assembly and having low cost.

The present invention provides a door mirror assembly as definded by the features of claim 1.

The door mirror assembly for a vehicle includes a housing, and a frame supporting the housing internally. The housing has a shell with a front aperture, two attachment ports formed on the inner surface of the shell and an engagement port formed integrally with the shell. On the other hand, the frame has a main body to be enclosed by the shell, two attachment elements formed on the outer surface of main body and an engagement element formed integrally with the main body.

The door mirror assembly further includes only two attachment sections formed by attaching the two attachment ports and two attachment elements using removable fasteners and an engagement section formed by engaging the engagement port with the engagement element. The engagement section is adapted to be on the circumference of a circle, and the center of that circle lies on an axis defined by the two attachment sections, so that the rotational displacement of housing relative to the frame can be restricted. Put another way, the engagement section is radially spaced from the line connecting the two attachment sections.

The door mirror assembly described above employs attachment between the housing and frame with the two attachment sections and the engagement section, which is on the circumference of circle characterized spatially as described above. Optimal positioning of the engagement section allows the number of attachment sections, which require fasteners, to be reduced to two. The engagement section is formed simply by engaging the engagement port, which is formed integrally with the shell of housing, and the engagement element, which is formed integrally with the main body of frame. Therefore, the door mirror assembly can allow both easy assembly and a reduction in the number of parts as well as the number of man-hours associated with its assembly. In this connection, although the attachment strength of the engagement section is lower than that of the attachment sections, it maybe possible to obtain adequate attachment strength for fixing the housing and frame to each other using the two attachment sections due to the optimum positioning of the engagement section.

When a housing and a frame are fixed at only two locations (the attachment sections), the housing, which is not a rigid body, generally experiences displacement relative to the frame about an axis defined by the two attachment sections. Addition of an engagement section adapted to be on the circumference of a circle, the center of which lies on the above axis, restricts the rotational displacement (torsional displacement about the axis), thereby increasing the attachment strength. It is noted that the addition of an engagement section does not generally result in an increase in the product cost since the engagement port and the engagement element are formed integrally with the molding of the housing and the frame, respectively.

Another embodiment of the present invention provides a door mirror assembly, which may be as described above and which has at least two engagement sections wherein the engagement sections restrict the rotational displacement of housing in opposite directions to each other.

Since the door mirror assembly described above employs two attachment sections and two or more engagement sections for fixing the housing and the frame, the engagement sections restrict the rotational displacement of housing in opposite directions to each other so that the housing can not be unsteady relative to the frame. Addition of an attachment section, which requires an increase in the number of parts, will generally result in an increase in the product cost. On the other hand, the product cost will not generally increase if the number of engagement sections is increased. The reason for this is that an engagement port and an engagement element can be formed integrally with the molding of the housing and the frame, respectively.

Still another embodiment of the present invention provides a door mirror assembly, which may be as described in either of the previous embodiments, in which an engagement port includes a hole drilled into a shell, and an engagement element includes a column projecting from a main body and the column has a claw at an end thereof. The column is adapted to reach beyond the outer surface of the shell through the hole while the column is in contact with a side wall of the hole, and the claw is also adapted to be in contact with the periphery of the hole.

The door mirror assembly described above, which has a simple structure for engagement such that the column formed on the frame is engaged with the hole drilled into the shell, may enable a reduction in the production cost.

Yet another embodiment of the present invention provides a door mirror assembly, which may be as described in any one of the previous embodiments and which has a column having a contact surface which is in contact with the inner surface of a shell.

The door mirror assembly described above, in which the shell of a housing is interposed between a claw and the contact surface, can provide a higher attachment strength.

A further embodiment of the present invention provides a door mirror assembly, which may be as described in any one of the previous embodiments and which has a claw adapted to be positioned so that a direction of the width of the claw is substantially parallel with an axis defined by two attachment sections.

The door mirror assembly described above can apply the force to engagement sections evenly, which restricts the rotational displacement and deformation of a housing in a circumferential direction.

### BRIEF DESCRIPTION OF THE DRAWINGS

Fig.1 is an exploded perspective view showing a door mirror assembly for a vehicle according to an embodiment of the present invention.
Fig.2A is a view showing a door mirror assembly as viewed from the rear.
FIG.2B is a view showing a door mirror assembly as viewed from the bottom.
FIG.3A is a sectional view taken along line IIIA - IIIA in FIG.2A.
FIG.3B is a sectional view taken along line IIIB - IIIB in FIG.2A.
FIG.4A is a view showing a frame as viewed from the rear.
FIG.4B is a view showing a frame as viewed from the bottom.
FIG.5 is a view showing a mirror assembly as viewed in the direction identified with an arrow C in FIG.2A.
FIG.6 is a conceptual schematic illustrating the positions of the attachment sections and the engagement sections.

An embodiment of the present invention is now described with reference to the accompanying drawings.

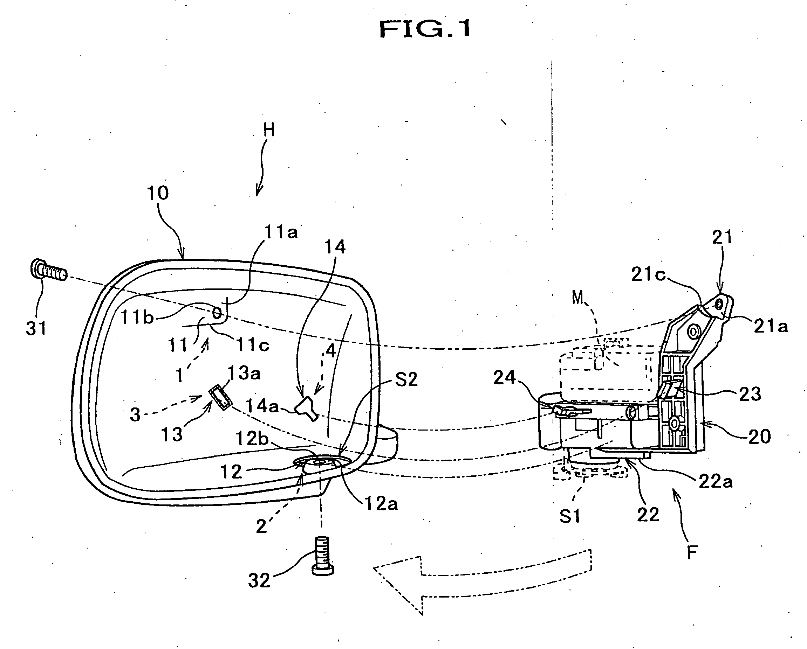

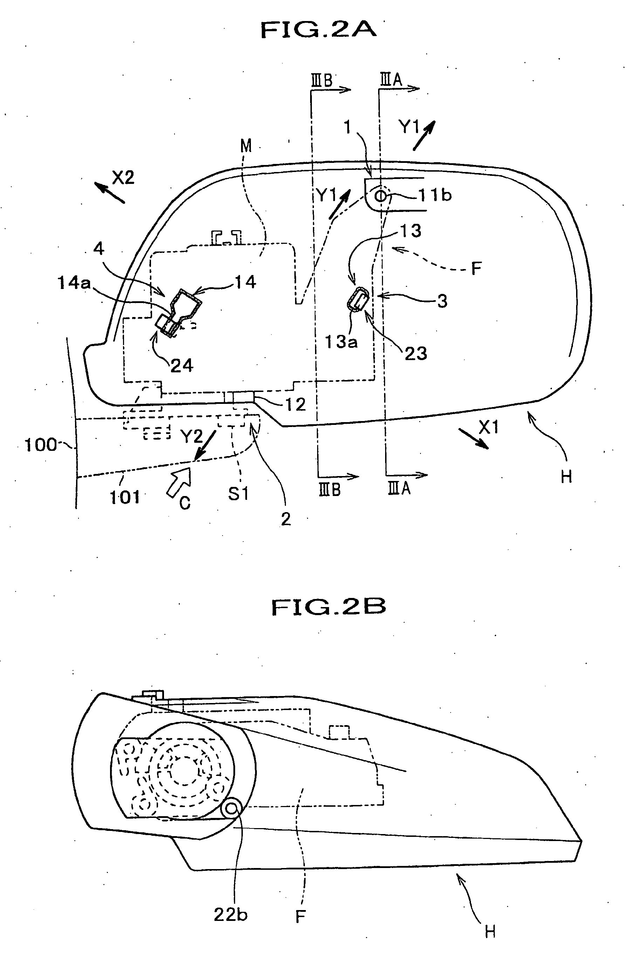

As shown in FIGS.1, 2A and 2B, a door mirror assembly for a vehicle according to an embodiment of the present invention includes a door mirror housing (hereinafter referred to as a housing H) and a frame F which supports the housing H internally. The door mirror assembly is mounted on a mirror base 101 which is provided on the side of a vehicle 100, as shown in FIG.2A. The door mirror assembly also includes a mirror (not shown) which is installed in the front aperture of housing H, and accommodates a control sub-assembly (not shown) for controlling the angle of mirror within the housing H.

As shown FIG.1, the housing H includes a shell 10 made of a synthetic resin, upper and lower attachment ports 11 and 12 which are formed on the inner surface of shell 10 and first and second engagement ports 13 and 14 which are formed integrally with the shell 10. The positions of the upper and lower attachment ports 11, 12 and the first and second engagement ports 13, 14 are correlated with those of upper and lower attachment elements 21, 22 and first and second engagement elements 23, 24, respectively.

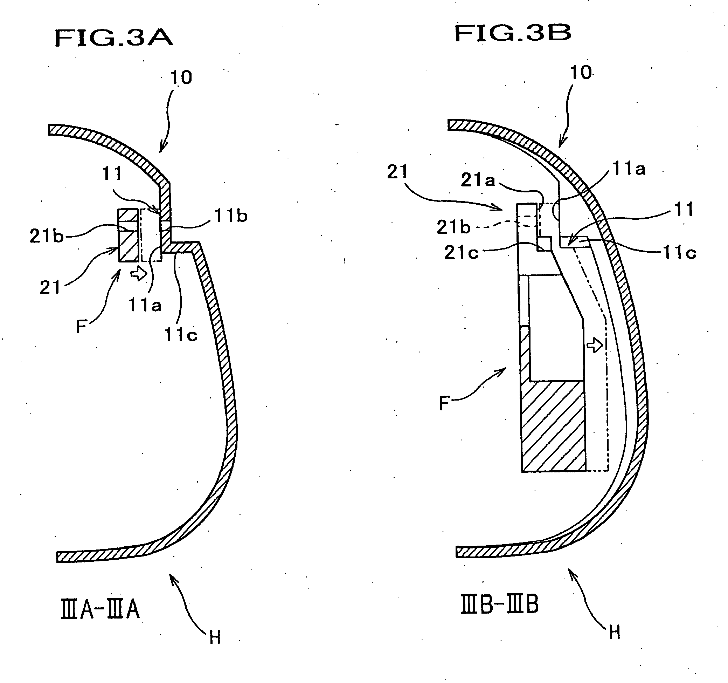

As shown in FIG.1, the upper attachment port 11 has a bearing surface 11a, which is formed on the upper middle part of the inner surface of shell 10 and a screw hole 11b drilled into the bearing surface 11a. As shown in FIG.3A, which depicts a cross sectional view taken along line IIIA - IIIA in FIG.2A, an L-shaped portion recessed inwardly into the shell 10 forms the upper attachment port 11. The lower portion of side surface 11c of upper attachment port 11 is configured to be part-circular, as shown in FIG.1.

A lower attachment port 12, which is formed at the bottom of shell 10, has a bearing surface 12a and a screw hole 12b drilled into the center of the bearing surface 12a.

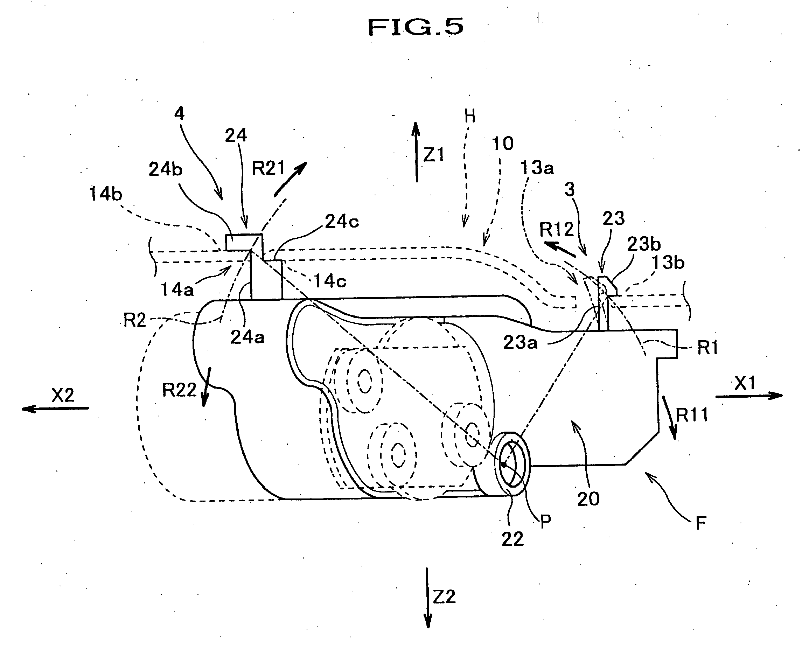

As shown in FIGS.1 and 2A, the first engagement port 13 has a hole 13a, which is rectangular and integrally formed with the shell 10. The position of first engagement port 13 is correlated with that of first engagement element 23, and the hole 13a is adapted such that its size is appropriate for insertion of a claw 23b as shown in FIG.5.

As shown in FIGS.1 and 2A, the second engagement port 14 has a hole 14a, which has a T-shaped section and is formed integrally with the shell 10. The position of second engagement port 14 is correlated with that of second engagement element 24, and the hole 14a is arranged so that the width of its upper portion is larger than that of the lower portion. The width of the upper portion of the hole 14a is adapted such that its size is appropriate for insertion of a claw 24b as shown in FIG.5. On the other hand, the width of the lower portion is adapted to be same as the thickness of the column 24a shown in FIG.5.

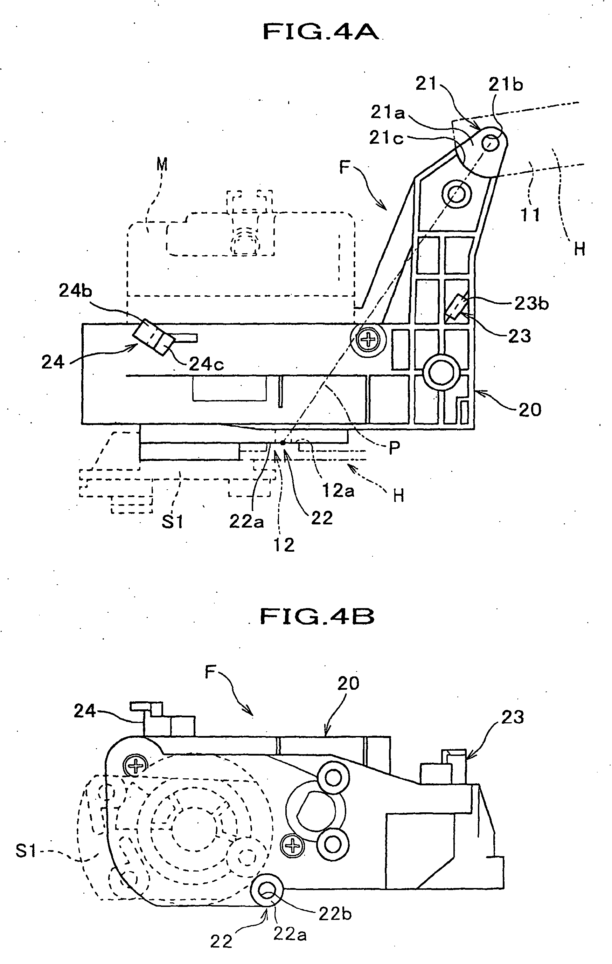

As shown in FIG.4A, the frame F includes a main body 20, which is made of a synthetic resin and nearly L-shaped as viewed from the side thereof. The upper and lower attachment elements 21, 22 are formed on the outer surface of main body 20 and the first and second engagement elements 23, 24 are formed integrally with the main body 20. A drive assembly M is also mounted on the main body 20 for positioning the door mirror assembly in a retracted or operative position. In this connection, a symbol S1 represents a base of shaft for transmitting drive power generated by the drive assembly M.

As shown in FIG.4A, the upper attachment element 21, which is formed on the upper end of main body 20, has a mounting surface 21a which comes in contact with the bearing surface 11a of housing H shown in FIG.1 and a screw hole 21b drilled into the mounting surface 21a. In the present embodiment, the upper attachment element 21 is located at a thinned portion of the upper end of main body 20. A contact surface 21c of upper attachment element 21 is adapted to be part-circular, the axis of the circle being substantially perpendicular to the axis P defined by the screw holes 21b and 22b, and comes into contact with the side surface 11c of upper attachment port 11 shown in FIG.1.

As shown in FIGS.4A and 4B, the lower attachment element 22, which is formed at the bottom of main body 20, has a mounting surface 22a which contacts the bearing surface 12a of housing H and a screw hole 22b drilled into the mounting surface 22a.

As shown in FIG.5, the first engagement element 23 includes a column 23a, which is plate like and formed on the outer surface of main body 20, facing the shell 10.

The column 23a extends beyond the outside surface of shell 10 through the hole 13a while it is in contact with the side wall of hole 13a. The column 23a has a claw 23b at the end thereof.

A surface of the claw 23b facing the main body 20 comes in contact with a periphery 13b of hole 13a flush with the outer surface of shell 10. As shown in FIG.4A, the claw 23b is positioned so that the direction of its width is substantially parallel with the axis P defined by the screw holes 21b and 22b.

As shown in FIG.5, the second engagement element 24 has a column 24a like a brick, and is formed on the outer surface of main body 20 facing the shell 10.

The column 24a extends beyond the outer surface of shell 10 through the hole 14a while it is in contact with the side wall of hole 14a. The column 24a also has a claw 24b at the end thereof and a contact surface 24c parallel to the claw 24b in the middle thereof. The distance between the inner (lower) surface of claw 24b and contact surface 24c is adapted to be equal to the thickness of shell 10 (see FIG.5).

A surface of the claw 24b facing the main body 20 comes into contact with a periphery 14b of hole 14a flush with the outer surface of shell 10. The contact surface 24c comes into contact with a periphery 14c of hole 14a flush with the inner surface of shell 10. As shown in FIG.4A, the claw 24b is positioned so that the direction of its width is substantially parallel with the axis P.

In the present embodiment, the upper and lower attachment elements 21, 22 and the first and second engagement elements 23, 24 are provided peripherally on the main body 20, as shown in FIGs.4A and 4B. This type of arrangement, which enables positioning of the elements in an evenly dispersed manner over the main body 20, allows stable retention of the housing H.

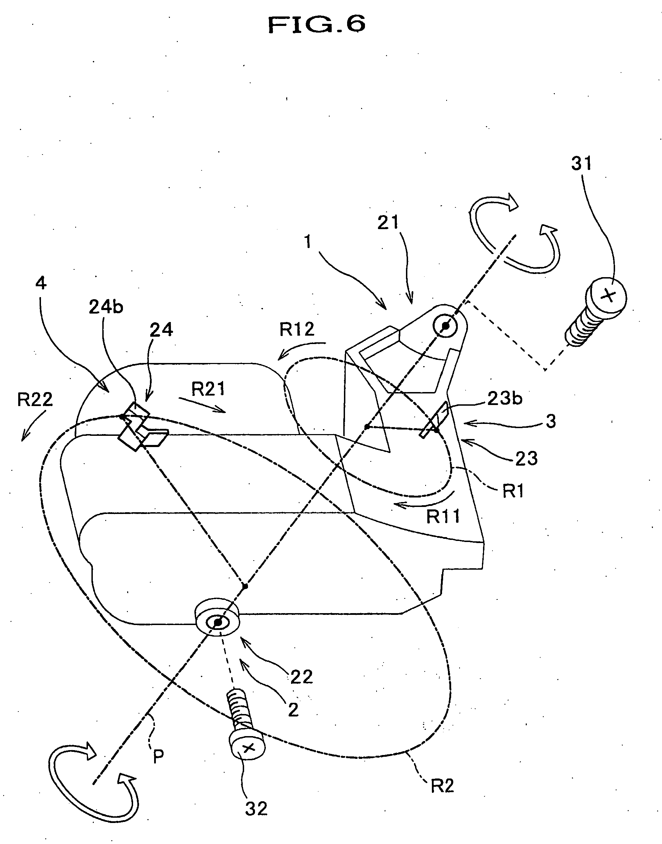

As shown in FIG.6, the claw 23b of column 23a and the claw 24b of column 24a are positioned on the circumferences of imaginary circles R1 and R2 respectively, the centers of which lie on the axis P defined by the upper and lower attachment elements 21 and 22.

A method for fixing a housing H and a frame F is described in detail below.

As shown in FIG.1, the frame F is mounted at a predetermined position inside the housing H. More specifically, while the base S1 of shaft attached to the frame F is positioned above a shaft hole S2 drilled into the bottom of the shell 10, the second engagement element 24 of frame F is inserted into the upper portion of larger width of the hole 14a so that the claw 24b shown in FIG.5 reaches the outside of shell 10.

Next, the frame F is slid diagonally downward, in the Y2 direction shown in FIG.2A, so that the column 24a is inserted into the smaller width (lower) portion of hole 14a until it rests on the bottom thereof. In this way, the column 24a and hole 14a are completely engaged. This engaged section is hereinafter referred to as the second engagement section 4. As shown in FIG.5, at the second engagement section 4, the column 24a comes into contact with both side walls of the hole 14a, and the inner side surface of claw 24b facing the main body 20 comes into contact with the periphery 14b of the hole 14a. Also the contact surface 24c comes into contact with the other periphery 14c of the hole 14a. In this way, the shell 10 of housing H is interposed between the claw 24b and contact surface 24c. Since the claw 24b of column 24a is positioned on the circumference of an imaginary circle R2, the center of which lies on an axis P defined by screw holes 21b and 22b as shown in FIG.4A, the second engagement section 4 is accordingly positioned on the same circumference.

As shown in FIGS.2A and 5, the displacement and deformation of the housing H in the directions shown by arrows X1, X2, Z1 and Z2 are restricted, so that the rotational displacement of the housing H about the axis P relative to the frame F, in the directions identified with arrows R21 and R22, is restricted.

As shown FIG.2A, the displacement and deformation of housing H relative to the frame F in the direction of arrow Y1 is restricted since the column 24a is inserted into the hole 14a until it rests on the bottom thereof.

As shown in FIG.5, the hole 13a of housing H and the column 23a of frame F are aligned and the frame F is urged toward the housing H. The column 23a deforms elastically in order to enter the hole 13a. When the claw 23b reaches the outside of shell 10, the column 23a recovers from this elastic deformation and the column 23a and hole 13a are thereby engaged. This engaged section is hereinafter referred to as the first engagement section 3. In the first engagement section 3, the column 23a comes in contact with a side wall of the hole 13a, and the inner side surface of the claw 23b facing the main body 20 comes in contact with the periphery 13b of hole 13a. Since the claw 23b of column 23a is positioned on the circumference of an imaginary circle R1, the center of which lies on the axis P defined by the screw holes 21b and 22b shown in FIG.4A, the first engagement section 3 is accordingly positioned on the same circumference.

As shown in FIGS.2A and 5, the displacement and deformation of the housing H in the directions shown by arrows X2 and Z1 are restricted, so that the rotational displacement of the housing H about the axis P relative to the frame F, in the direction identified with an arrow R12, is restricted.

It is possible to substantially or completely prevent the housing H from rattling relative to the frame F as a result of the retention provided by the first and second engagement sections 3 and 4. The first engagement section 3 restricts the rotational displacement of housing H relative to the frame F in the direction identified by the arrow R12 (R22). On the other hand, the second engagement section 4 restricts the rotational displacement in the reverse direction identified by the arrow R21 (R11).

As shown in FIGS.3B and 4A, when the housing H and frame F are engaged, the contact surface 21c of upper attachment element 21 comes in contact with the side surface 11c of upper attachment port 11. Since the contact surface 21c is adapted to be substantially perpendicular to the axis P, the displacement and deformation of housing H relative to the frame F in the direction identified by arrow Y2 are restricted. Also, as described above, since the second engagement section 4 restricts the displacement and deformation in the direction of arrow Y1, as shown in FIG.2A, it is consequently possible to restrict the displacement and deformation in the direction of axis P.

As shown in FIG.1, when the housing H and frame F are engaged with each other, the bearing surface 11a of the upper attachment port 11 comes into contact with the mounting surface 21a of the upper attachment element 21 and the screw hole 11b of the upper attachment port 11 and the screw hole 21b of upper attachment element 21 are aligned. Similarly, as shown in FIGS. 1 and 4B, the bearing surface 12a of the lower attachment port 12 comes into contact with the mounting surface 22a of the lower attachment element 22 and the screw hole 12b of the lower attachment port 12 and a screw hole 22b of the lower attachment element 22 are aligned.

As shown in FIG.1, a fastener 31, such as a screw, is screwed into the screw hole 11b from the outside of housing H so that the upper attachment port 11 of housing H and the upper attachment element 21 of frame F are attached. This attached section is hereinafter referred to as an upper attachment section 1. Similarly, a fasteners 32 is screwed into the screw hole 12b from the outside of housing H so that the lower attachment port 12 and the lower attachment element 22 are attached. This attached section is hereinafter referred to as a lower attachment section 2.

In the door mirror assembly for a vehicle according to the present embodiment, the housing H and frame F are attached to each other by the upper and lower attachment sections 1, 2 as shown in FIG.2A, and the first and second engagement sections 3, 4, which are positioned on the circumferences of circles that have centers lying on the axis P are engaged. Attachment of the housing H and frame F at only two locations this way can allow a reduction in the number of parts and man-hour expenditure associated with the assembling of a door mirror assembly.

Although the housing H and frame F are attached at only two locations, adequate attachment strength can be obtained as a result of an appropriate positioning of the first and second engagement sections 3 and 4. Since the first and second engagement sections 3 and 4 are positioned on the circumferences of circles, as shown in FIG.6, the centers of which lie on the axis P defined by a line drawn between the upper and lower attachment sections 1 and 2, the rotational displacement (i.e. torsional displacement about the axis P) of housing H relative to the frame F is restricted, which as a result improves the attachment strength.

The housing H, which intrinsically tends to rotate around the axis P relative to the frame F, will not rattle under high attachment strength as a result of the restriction provided by the first and second engagement sections 3 and 4. The first and second engagement sections 3 and 4, which are positioned offset from the axis P, can restrict rotational movements in the directions identified by the arrows R12 and R21, respectively.

It is possible to achieve excellent workability for the steps of assembling the first and second engagement sections 3 and 4 since no adhesives or fasteners such as screws are required for these steps. The first engagement section 3 is assembled by inserting the column 23a, integrally formed with the main body 20 of frame F, into the hole 13a integrally formed with the shell 10 of housing H. The second engagement section 4 is assembled in the similar manner to that of the first engagement section 3.

At least during the assembling of a door mirror assembly, relatively secure attachment of the housing H and frame F, which is realized by simple engagement of these two, can prevent the frame F not only from slipping out of the housing H but also from undergoing displacement, even if there is no mechanical attachment with fasteners. This will lead to excellent workability while the housing H and frame F are attached with fasteners 31 and 32 as shown in FIG.1.

The present embodiment, which uses a simple structure for the holes 13a and 14a drilled into the housing H, as well as for the columns 23a and 24a integrally formed with the frame F, can provide a reduction in production cost.

The minimum use of fasteners for attaching the housing H and frame F allows a reduction in the number of parts and man-hours associated with assembly.

Since the size and shape of housing H and frame F of the present embodiment represents an example, they may be modified according to the vehicle to which the door mirror assembly is mounted. The construction of each engagement port of housing H and each engagement element of frame F is also not limited to those described in the above embodiment. For example, a claw may be formed on the housing H and a hole drilled into the frame F. Furthermore, although there are two engagement sections in the present embodiment this can be reduced to one, or increased as required.

## Claims

1. A door mirror assembly for a vehicle comprising:
a housing (H), wherein the housing has a shell (10) with a front aperture, two attachment ports (11, 12) formed on the inner surface of the shell and an engagement port (13 or 14) formed integrally with the shell;
a frame (F) supporting the housing internally, wherein the frame has a main body (20) to be enclosed by the shell (10), two attachment elements (21, 22) formed on the outer surface of the main body and an engagement element (23 or 24) formed integrally with the main body;
two attachment sections (1, 2) formed by attaching the two attachment ports and two attachment elements with removable fasteners (31, 32); and
an engagement section (3 or 4) formed by engaging the engagement port with the engagement element,
wherein the engagement section is arranged so as to be on the circumference of a circle, and the center of that circle lies on an axis defined by the two attachment sections, so that the rotational displacement of the housing relative to the frame can be restricted,
**characterised in that** the door mirror assembly comprises only two such attachment sections.

2. A door mirror assembly according to claim 1, wherein at least two engagement sections (3, 4) are provided and the engagement sections restrict the rotational displacement of housing in opposite directions to each other.

3. A door mirror assembly according to claim 1 or claim 2, wherein at least one engagement port comprises a hole (13a or14a) drilled into the shell, and the corresponding engagement element comprises a column (23a or 24a) projecting from the main body, the column having a claw (23b or 24b) at one end thereof, and further wherein the column is adapted to reach beyond the outer surface of the shell through said hole while the column is in contact with a side wall of the hole, and the claw is adapted to be in contact with the periphery of the hole.

4. A door mirror assembly according to claim 3, wherein the column has a contact surface (24c) which is adapted to be in contact with the inner surface of shell.

5. A door mirror assembly according to claim 3 or claim 4, wherein the claw is adapted to be positioned so that a direction of the width of claw is substantially parallel with said axis.

## Patentansprüche

1. Außenspiegelanordnung für ein Fahrzeug, umfassend:
ein Gehäuse (H), wobei das Gehäuse eine Schale (10) mit einer Öffnung an der Vorderseite, zwei an der Innenseite der Schale ausgebildete Befestigungsöffnungen (11, 12) und eine einstückig mit der Schale ausgebildete Eingriffsöffnung (13 oder 14) aufweist;
einen Rahmen (F), der das Gehäuse innen stützt, wobei der Rahmen einen Hauptkörper (20), der durch die Schale (10) umschlossen wird, zwei an der Außenoberfläche des Hauptkörpers ausgebildete Befestigungselemente (21, 22) und ein einstückig mit dem Hauptkörper ausgebildetes Eingriffselement (23 oder 24) umfasst;
zwei Befestigungsabschnitte (1, 2), die durch das Befestigen der zwei Befestigungsöffnungen und der zwei Befestigungselemente mit entfernbaren Verbindungselementen (31, 32) ausgebildet werden; und
einen Eingriffsabschnitt (3 oder 4), der durch das In-Eingriff-Bringen der Eingriffsöffnung mit dem Eingriffselement ausgebildet wird,
wobei der Eingriffsabschnitt so angeordnet ist, dass er am Umfang eines Kreises vorliegt und der Mittelpunkt des Kreises auf einer Achse liegt, die durch die beiden Befestigungsabschnitte definiert wird, sodass die Rotationsverschiebung des Gehäuses in Bezug auf den Rahmen eingeschränkt werden kann,
**dadurch gekennzeichnet, dass** die Außenspiegelanordnung nur zwei dieser Befestigungsabschnitte umfasst.

2. Außenspiegelanordnung nach Anspruch 1, worin zumindest zwei Eingriffsabschnitte (3, 4) bereitgestellt sind und die Eingriffsabschnitte die Rotationsverschiebung des Gehäuses in einander entgegengesetzten Richtungen einschränken.

3. Außenspiegelanordnung nach Anspruch 1 oder 2, worin zumindest eine Eingriffsöffnung ein Loch (13a oder 14a) umfasst, das in die Schale gebohrt wird, und das entsprechende Eingriffselement eine Säule (23a oder 24a) umfasst, die von dem Hauptkörper vorsteht, wobei die Säule an einem Ende eine Klaue (23b oder 24b) aufweist und wobei die Säule außerdem geeignet ist, um durch das Loch über die Außenoberfläche der Schale hinauszureichen, während die Säule eine Seitenwand des Lochs berührt, und die Klaue geeignet ist, um den Umfang des Lochs zu berühren.

4. Außenspiegelanordnung nach Anspruch 3, worin die Säule eine Kontaktoberfläche (24c) aufweist, die geeignet ist, um die Innenoberfläche der Schale zu berühren.

5. Außenspiegelanordnung nach Anspruch 3 oder 4, worin die Klaue geeignet ist, um so angeordnet zu werden, dass die Richtung der Breite der Klaue im Wesentlichen parallel zu der Achse verläuft.

## Revendications

1. Ensemble de rétroviseur de porte pour un véhicule comprenant:
un boîtier (H), où le boîtier comporte une coque (10) avec une ouverture avant, deux orifices de fixation (11, 12) formés sur la surface intérieure de la coque et un orifice d'engagement (13 ou 14) formé intégralement avec la coque;
un châssis (F) supportant le boîtier intérieurement, où le châssis possède un corps principal (20) à renfermer par la coque (10), deux éléments de fixation (21, 22) formés sur la surface extérieure du corps principal et un élément d'engagement (23 ou 24) réalisé intégralement avec le corps principal;
deux sections de fixation (1, 2) formées en fixant les deux orifices de fixation et deux éléments de fixation avec des attaches amovibles (31, 32); et
une section d'engagement (3 ou 4) formée en mettant en prise l'orifice d'engagement avec l'élément d'engagement,
où la section d'engagement est agencée de manière à se trouver sur la circonférence d'un cercle, et le centre du cercle se situe sur un axe défini par les deux sections de fixation de sorte que le déplacement rotationnel du boîtier relativement au châssis peut être limité, **caractérisé en ce que** l'ensemble de rétroviseur de porte comprend seulement deux de ces sections de fixation.

2. Ensemble de rétroviseur de porte selon la revendication 1, dans lequel au moins deux sections d'engagement (3, 4) sont prévues, et les sections d'engagement limitent le déplacement rotationnel du boîtier dans des directions opposées l'une à l'autre.

3. Ensemble de rétroviseur de porte selon la revendication 1 ou la revendication 2, dans lequel au moins un orifice d'engagement comprend un trou (13a ou 14a) foré dans la coque, et l'élément d'engagement correspondant comprend une colonne (23a ou 24a) faisant saillie du corps principal, la colonne ayant une griffe (23b ou 24b) à l'une de ses extrémités, et en outre où la colonne est apte à s'étendre au-delà de la surface extérieure de la coque à travers ledit trou pendant que la colonne est en contact avec une paroi latérale du trou, et la griffe est apte à être en contact avec la périphérie du trou.

4. Ensemble de rétroviseur de porte selon la revendication 3, dans lequel la colonne possède une surface de contact (24c) qui est apte à être en contact avec la surface intérieure de la coque.

5. Ensemble de rétroviseur de porte selon la revendication 3 ou la revendication 4, dans lequel la griffe est apte à être positionnée de façon qu'une direction de la largeur de la griffe soit sensiblement parallèle audit axe.
